# EUROPEAN PATENT SPECIFICATION

(11) **EP 1 960 236 B1**
(45) Date of publication and mention of the grant of the patent: **21.04.2010**
(21) Application number: 06842237.7
(22) Date of filing: 15.12.2006
(51) Int. Cl.: B60R 21/233

(54) **AIRBAG APPARATUS**
AIRBAG-VORRICHTUNG
DISPOSITIF AIRBAG

(30) Priority: 16.12.2005 JP 2005363672
(43) Date of publication of application: 27.08.2008
(73) Proprietor: Toyota Jidosha Kabushiki Kaisha, Toyota-shi, Aichi-ken, 471-8571 (JP)
(72) Inventor: FUKAWATASE, Osamu, Aichi-ken, 471-8571 (JP); SANADA, Akiyoshi, Aichi-ken, 471-8571 (JP)
(74) Representative: Winter, Brandl, Fürniss, Hübner Röss, Kaiser, Polte Partnerschaft Patent- und Rechtsanwaltskanzlei
(86) International application number: PCT/IB2006/003629
(87) International publication number: WO 2007/069064

(56) References cited:
- EP-A1- 1 279 566
- EP-A1- 1 318 052
- EP-A1- 1 442 944
- DE-A1- 19 914 214
- FR-A- 2 131 070
- JP-A- 2000 153 747

## Description

### BACKGROUND OF THE INVENTION

### 1. Field of the Invention

The invention relates to an airbag apparatus that deploys an airbag toward an occupant during a collision.

### 2. Description of the Related Art

Japanese Patent Application Publication No. JP-A-2000-153747 describes (JP-A-2000-153747) a driver seat airbag apparatus including an airbag that has a center portion that is inflated by gas directly injected from an inflator, and a peripheral portion that is separated from the center portion by a partition member and which is inflated by gas that flow into it from the center portion via a connecting hole formed in the partition member. According to this structure, during a frontal collision, the center portion first expands to catch the head, chest, and abdominal regions of the occupant. When the internal pressure of the center portion becomes equal to or greater than a predetermined value, the connecting hole opens, allowing gas from the center portion to flow into the peripheral portion so that the peripheral portion is inflated. As a result, the size of the airbag can be reduced.

However, with the technology in JP-A-2000-153747, because the center portion of the airbag restrains the head, chest, and abdominal regions of the occupant there is a limit to the amount by which the size of the airbag may be reduced. Thus, there remains room for improvement with the related art in this respect. When reducing the size of an airbag, it must be done in a manner that will not reduce the early restraint performance of the airbag with respect to the occupant.

Also, if the behavior of an airbag, particularly a passenger-side airbag, is unstable, the airbag may not be able to absorb the energy of an impact as intended. Therefore, it is also preferable to take into account the behavior of the airbag when the airbag is deployed. The technology in JP-A-2000-153747, however, relates to a driver seat airbag and thus makes no particular reference to this point.

### SUMMARY OF THE INVENTION

In view of the foregoing, the invention provides an airbag apparatus that is capable of not only further reducing the size of an airbag, while ensuring the early restraint performance of the airbag with respect to an occupant, but also stabilizing the behavior of the airbag when it is deployed.

One aspect of the invention thus relates to an airbag apparatus characterized by including gas generating means that injects gas when activated during a vehicle collision, and an airbag that is stored folded up in an instrument panel and includes a main portion and a peripheral portion. The main portion of the airbag has a center portion of a predetermined width that deploys toward an occupant when inflated by the gas generated by the gas generating means and an upper portion, which extends out toward both sides in the bag width direction on an upper end side of the center portion and expands together with the center portion. The peripheral portion of the airbag is provided around the main portion and separated from the main portion by a partition member in which a communication hole providing communication with the bag main portion is formed, and expands when inflated by the gas that comes from the main portion via the communication hole.

According to this aspect, during a vehicle collision, the gas generating means generates and injects gas into the airbag, which is stored folded up in an instrument panel.

Here, according to this structure, the airbag includes a main portion and a peripheral portion. Further, the main portion of the airbag has a center portion of a predetermined width and an upper portion that extends out to both sides in the bag width direction from the upper end side of the center portion. Therefore, when the inflator supplies gas to the main portion, the center portion is deployed toward the occupant with a predetermined width, and the upper portion is deployed toward the occupant together with the center portion while extending out toward both sides in the bag width direction. The main portion, which includes the center portion and the upper portion, then catches the head region of the occupant, absorbing collision energy during a vehicle collision.

To elaborate, an occupant of the vehicle is usually restrained in vehicle seat at his or her abdominal region (including the lumbar region) and chest region by a seat belt apparatus. Therefore, the part of the occupant most likely to move a great deal toward the front of the vehicle due to inertia in a vehicle collision is the head region. Accordingly, with this aspect, the collision energy during a vehicle collision is absorbed by catching and restraining the head region of the occupant with the main portion.

Also, when the internal pressure of the main portion of the airbag rises from the force applied by the occupant as he/she makes contact with it, gas from inside the main portion flows into the peripheral portion of the airbag through the communication hole formed in the partition member. As a result, the peripheral portion expands to absorb the collision energy from the inertial force of portions of the upper body of the occupant except for the head region. Also, supplying the gas from inside the main portion into the peripheral portion enables gas that is conventionally expelled out of the airbag to be more effectively used.

In this way, the foregoing aspect makes it possible not only to ensure early occupant restraint performance by restraining both the abdominal region and the chest region of the occupant with the seat belt apparatus and expanding and deploying the main portion of the airbag to the head region of the occupant first, but also to greatly reduce the size of the airbag.

In addition, according to the foregoing aspect, the main portion of the airbag has an upper portion that increases the surface area that contacts the windshield compared with a main portion that has only a center portion. Accordingly, behavior of the main portion is that much more stable when the airbag is deployed.

As described above, the airbag apparatus according to the foregoing aspect makes it possible to not only further reduce the size of the airbag while ensuring early passenger restraint performance by the airbag, but also stabilize the behavior of the airbag during deployment

In the foregoing aspect, the communication hole may be closed when the internal pressure of the main portion is below a predetermined value, and opened when the internal pressure of the main portion is equal to or above the predetermined value.

According to this structure, the communication hole in the partition member is closed when the internal pressure of the main portion of the airbag is below a predetermined value, thus enabling the main portion to expand and deploy rapidly. Also, when the internal pressure of the main portion is equal to or above the predetermined value, the communication hole in the partition member opens to allow gas from within the main portion to flow into the peripheral portion. Accordingly, the airbag can be expanded and deployed efficiently with the minimum amount of gas necessary.

This structure also enables the size of the airbag to be further reduced even more effectively.

In the foregoing aspect, the communication hole may also be closed by a closure member that is larger than the outer periphery of the communication hole, and an outer peripheral portion of the closure member may be sewn on with a tear seam that tears when subject to an internal pressure equal to or greater than the predetermined value.

In the foregoing aspect, the predetermined value may be the gas pressure when the main portion is completely expanded and deployed.

Also in the foregoing aspect, a lower portion that extends out toward both sides in the bag width direction and expands together with the center portion may be provided on a lower end side of the center portion.

According to this structure, the lower portion may be provided in addition to the upper portion and center portions. Therefore, the lower portion, together with the seat belt apparatus, enables the abdominal region of the occupant to be restrained early on in a collision.

Also, by adding the lower portion, the upper portion can be made to contact the windshield and the lower portion can be made to contact the upper surface of the instrument panel. As a result, the main portion is deployed toward the occupant while being sandwiched from above and below, which further stabilizes the behavior of the main portion of the airbag during deployment

That structure also improves the occupant protection performance in terms of both enhancing the protection performance with respect to the abdominal region of the occupant and stabilizing the behavior of the main portion of the airbag.

Also in the foregoing aspect, a middle portion, which extends out toward both sides in the bag width direction and expands together with the center portion, may be provided in a predetermined position in the height direction of the center portion.

According to this structure, not only do the center portion and the upper portion catch the head region of the occupant, but the middle portion catches and restrains the shoulders of the occupant. In this way, while the highest priority is given to the protection of the occupant's head region, the amount of movement of the occupant toward the front of the vehicle due to inertia is effectively suppressed by restraining both the head region and the shoulders of the occupant early on in a collision.

Also, because this structure enables not only the head region but also the shoulders of the occupant to be restrained early on in a collision, the occupant protection performance is improved even more.

In the foregoing aspect, the main portion may be divided by a second partition member at a portion in substantially the middle in the bag width direction of the main portion.

According to this structure, gas flows to both sides of the second partition member in the main portion so that both sides of the main portion expand and deploy. Because gas will not pass through the second partition in the main portion, the airbag is also effective in a so-called oblique collision in which the collision surface is at an angle. That is, in an oblique collision, the direction in which the occupant moves due to inertia is offset from the front of the vehicle to the left or right. Therefore, if the main portion of the airbag is divided at a portion substantially in the middle in the width direction, then no matter which direction the occupant moves (regardless of whether the occupant swings to the left or to the right with respect to straight ahead of the vehicle) due to inertia, the head region of the occupant is able to be reliably caught and the collision energy absorbed.

Thus, the structure also improves the occupant protection performance particularly during an oblique collision.

In the foregoing aspect, the communication hole may be closed by a valve mechanism that varies the opening amount according to the internal pressure of me main portion.

According to this structure, the communication hole formed in the partition member or the second partition member may be closed by the valve mechanism that varies the opening amount depending on the internal pressure of the main portion. As a result, the reaction force applied to the head region of the occupant from the center portion of the main portion can be increased or decreased according to the speed with which the head region moves due to inertia. That is, when the head region of the occupant moves fast due to inertia, control can be performed to increase the opening amount of the valve mechanism in order to increase the amount of gas flowing into the peripheral portion from the center portion of the main portion, thereby increasing the energy absorption efficiency during a collision. This reduces the reaction force applied to the head region of the occupant from the center portion of the main portion of the airbag.

That structure also makes it possible to control the energy absorption efficiency of the main portion during a collision (i.e., control the reaction force input to the head region of the occupant from the main portion), thereby improving the occupant protection performance even more.

In the foregoing structure, the valve mechanism may be a spring.

Also in the foregoing aspect, a communication hole that opens when the internal pressure of the peripheral portion becomes equal to or greater than the predetermined value may be provided between the peripheral portion and outside of the airbag.

### BRIEF DESCRIPTION OF THE DRAWINGS

The foregoing and/or further objects, features and advantages of the invention will become apparent from the following description of example embodiments with reference to the accompanying drawings, in which the same or corresponding portions are denoted by the same reference numerals and wherein:
FIG 1 is a longitudinal sectional view showing the operational state of a passenger-side airbag apparatus according to a first example embodiment of the invention;
FIG. 2 is a perspective view showing the passenger-side airbag shown in FIG. 1 in a deployed state;
FIG 3 is a transverse sectional view of the passenger-side airbag shown in FIG. 1 cut in vehicle width direction;
FIG 4 is a longitudinal sectional view showing the operational state of a passenger-side airbag apparatus according to a second example embodiment of the invention;
FIG 5 is a perspective view showing the passenger-side airbag shown in FIG 4 in a deployed state;
FIG 6 is a transverse sectional view of the passenger-side airbag shown in FIG 4 cut in vehicle width direction;
FIG 7 is a transverse sectional view corresponding to FIG 3 of an example of a passenger-side airbag according to a third example embodiment of the invention;
FIG 8 is a transverse sectional view corresponding to FIG 6 of another example of a passenger-side airbag according to the third example embodiment of the invention;
FIG 9 is a transverse sectional view corresponding to FIG 3 of an example of a passenger-side airbag according to a fourth example embodiment of the invention;
FIG 10 is a transverse sectional view corresponding to FIG 6 of another example of a passenger-side airbag according to the fourth example embodiment of the invention; and
FIG 11 is a perspective view showing a passenger-side airbag according to a fifth example embodiment of the invention in a deployed state.

### DETAILED DESCRIPTION OF THE INVENTION

### 1. First example embodiment

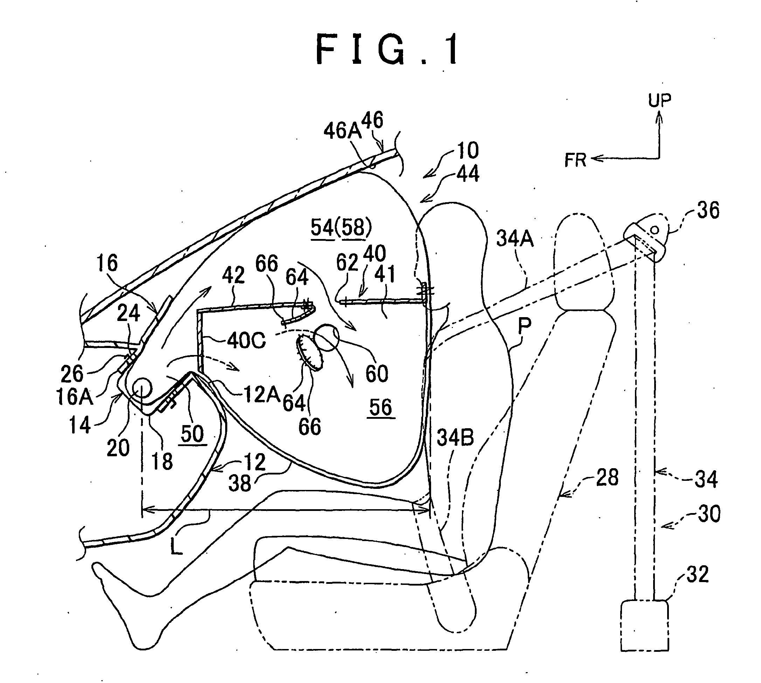

A first example embodiment of an airbag apparatus according to the invention will hereinafter be described with reference to FIGS. 1 to 3. In the drawings, arrow FR points to the front of the vehicle, arrow UP points up with respect to the vehicle, arrow IN points to the inside of the vehicle in the vehicle width direction, and arrow OUT points to the outside of the vehicle in the vehicle width direction.

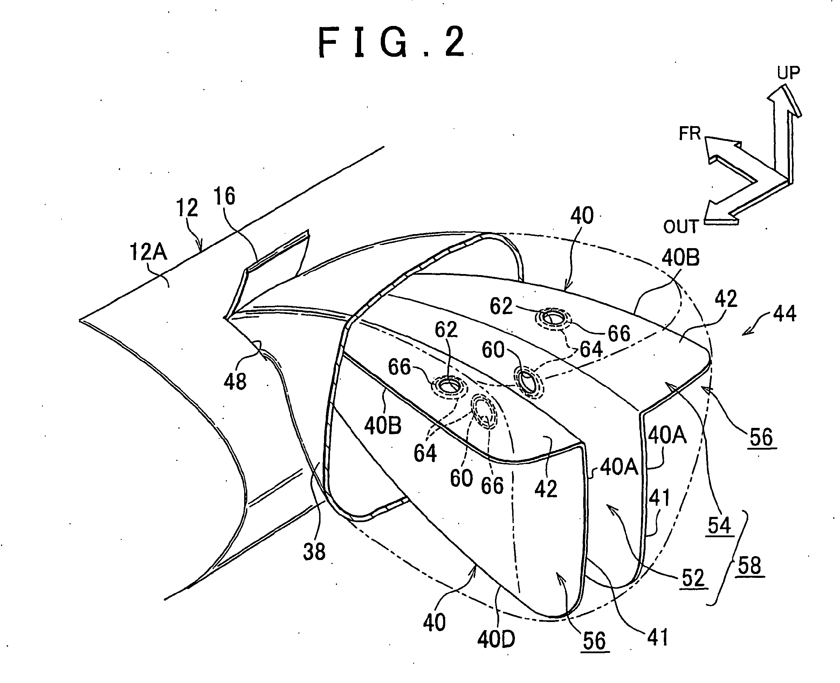

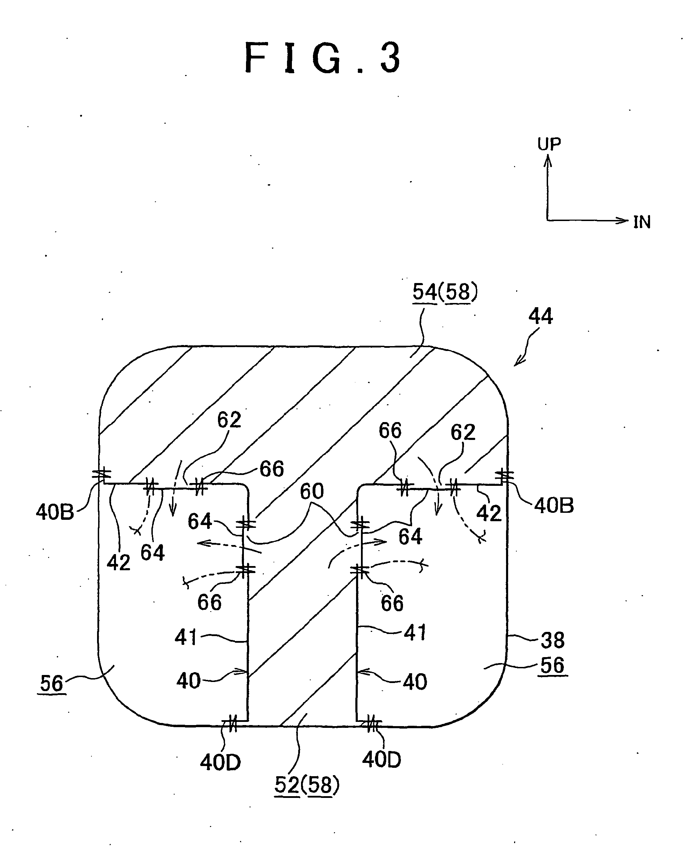

FIG. 1 is a longitudinal sectional view showing the operational state of a passenger-side airbag apparatus 10 according to this example embodiment cut in the longitudinal direction of the vehicle. Also, FIG. 2 is a perspective view showing only the main parts of the passenger-side airbag apparatus 10 in the operational state. Moreover, FIG 3 is a transverse sectional view of a passenger-side airbag apparatus 44, to be described later, in an expanded and deployed state that is cut in the vehicle width direction.

As shown in the drawings, the passenger-side airbag apparatus 10 is arranged on the passenger side of an upper surface 12A of an instrument panel 12. This passenger-side airbag apparatus 10 mainly includes an airbag module 14 housing functioning components, and an airbag door 16 that closes the open portion at the upper end of the airbag module 14. The airbag module 14 includes a module case 18 with an open upper side and which houses functioning components, a generally column-shaped inflator 20 that functions as gas generating means that is housed in the module case 18, and the passenger-side airbag 44, which is stored folded up around the inflator 20. Depending on the apparatus, a diffuser (i.e., rectifying means) to rectify the gas may also be arranged between the inflator 20 and the passenger-side airbag 44.

The functioning components are as follows. The inflator 20 used may be either a gas-generating agent filled inflator or a high-pressure gas filled inflator. Also, the inflator 20 used may be either an electrical ignition type inflator or a mechanical ignition type inflator. In this example embodiment, an electrical ignition type inflator is used. With the electrical ignition type inflator 20, an igniter, not shown, is provided, the operation of which is controlled by an airbag ECU, not shown, which is arranged below but near a console box. That is, if a frontal collision is detected by a front airbag sensor or a center airbag sensor or the like (or if a frontal collision is predicted by a pre-crash sensor using millimeter-wave radar or the like arranged near the center of a front bumper), the airbag ECU determines that airbag operation is necessary and thus supplies a predetermined current to the igniter.

Also, a gas injection hole for injecting gas is formed in a predetermined position in a peripheral wall portion of the inflator 20. Gas injected from this gas injection hole flows into the passenger-side airbag 44. When a diffuser is arranged between the inflator 20 and the passenger-side airbag 44, the gas injected from the gas injection hole flows into the passenger-side airbag 44 after first being rectified by the diffuser. Also, in this example embodiment, the structure is such that the inflator 20 is arranged protruding into the passenger-side airbag 44, though the invention is not limited to this. For example, the diffuser may be arranged to the inside of the peripheral edge of the open portion, through which gas flows, that is formed in the passenger-side airbag 44, and the passenger-side airbag 44 may be arranged so that the upper half of the inflator 20, which is fixed to the bottom portion of the module case 18, is covered by the diffuser. Any structure may be employed here as long as the gas injected from the inflator 20 flows into the passenger-side airbag 44.

The module case 18 is supported via a bracket, not shown, by an instrument panel reinforcement which is a very strong and highly rigid member arranged along the vehicle width direction in the instrument panel 12.

Meanwhile, the airbag door 16 used may be either a door that is integrated with the instrument panel 12 or a separate door that fits into the open portion formed in the instrument panel 12. A tear line that functions as a breaking portion for opening the airbag door 16 is formed in the front or back surface of the instrument panel 12. When a bag expansion pressure of a predetermined value or more is applied to the airbag door 16, the instrument panel 12 tears along the tear line so that it opens in one or more sections. A leg portion 16A is integrally formed on the back-side of the airbag door 16 and a retaining hole 24 is formed in this leg portion 16A. A hook 26 is formed corresponding to that retaining hole 24 on the upper end side of the module case 18. The upper-side of the module case 18 is closed by the airbag door 16 by inserting the hook 26 into the retaining hole 24 so that it is retained.

Next, a seat belt apparatus 30 that restrains an occupant P seated in a passenger seat 28 will be described. The seat belt apparatus 30 includes a webbing winding device 32 provided near the lower portion of a center pillar. An end portion of webbing 34 for restraining an occupant is retained by a winding shaft of the webbing winding device 32. A mid portion of the webbing 34 is inserted through a shoulder anchor 36 provided on the upper portion side of the center pillar and folded back. The other portion of the webbing 34 is fastened to anchor plate that is fix to a part of the body such as the vehicle floor. Further, the center portion of the webbing 34 (i.e., the portion from the shoulder anchor 36 to an anchor plate) is also inserted through a tang plate, not shown. The occupant P can be secured by the webbing of the three-point seat belt apparatus 30, which includes shoulder side webbing 34A and a lap side webbing 34B, by engaging the tang plate into a buckle device that is attached to a seat cushion frame of the passenger seat 28.

Here, the structure of the passenger-side airbag 44, which is a main part of the passenger-side airbag apparatus 10 according to this example embodiment, will be described in detail.

As shown in FIG 2, the passenger-side airbag 44 includes a bag foundation fabric 38 formed in the shape of a bag, and pair of left and right partition members 40 sewn inside the bag foundation fabric 38. Each of the partition members 40 is formed in the shape of a hook (i.e., in a shape resembling a inverted letter L) when viewed from the occupant side, with a vertical wall 41 and a horizontal wall 42. The dimensions of the vertical wall 41 are such that its height is lower than the overall height of the passenger-side airbag 44 when the airbag 44 is expanded. Also, the peripheral edge portion of each partition member 40 is sewn to the bag foundation fabric 38. More specifically, a rear end edge 40A, a side edge 40B, and a lower edge 40D of each partition member 40 are sewn to the inside surface of the bag foundation fabric 38, and a front end portion 40C (see FIG 1) is sewn folded toward the outside of the bag in the bag width direction to the inside surface of the bag foundation fabric 38 so that it blocks off a flow path to a peripheral portion 56 which will be described later. Further, the left and right partition members 40 are arranged a predetermined distance away from each other in the bag width direction.

According to this structure, the internal space of the passenger-side airbag 44 is separated into a bag base end portion 50 (see FIG. 1) which is not divided into left and right sides by the partition member 40 (i.e., the portion located closer to the inflator 20 than the front end of the partition members 40), a long vertical center portion 52 formed between the vertical walls 41 of the left and right partition members 40, an upper portion 54 that extends toward both sides in the bag width direction from the upper end side of that center portion 52, and the peripheral portion 56 that is surrounded by the partition members 40 and the bag foundation fabric 38. Of these, the center portion 52 and the upper portion 54 are portions that form a main portion 58. In other words, the air chamber of the main portion 58 of the passenger-side airbag 44 is shaped like the letter "T" when viewed from the occupant side. Also, the length L (see FIG 1) of the passenger-side airbag 44 in the longitudinal direction of the vehicle when the airbag 44 is expanded and deployed is as that of a conventional passenger-side airbag, when the conventional airbag is expanded and deployed.

Also, a first vent hole 60 is formed in the vertical wall 41 of each partition member 40, and a second vent hole 62 is formed in the horizontal wall 42 of each partition member 40. The first vent hole 60 and the second vent hole 62 are both structured such that an outer peripheral portion of a closure member 64, which has a slightly larger diameter than that of the hole, is sewn on with a tear seam 66 that will tear if the gas pressure equal to or greater than a predetermined value is applied. This predetermined value may be the gas pressure when the main portion of the airbag 58 is fully expanded and deployed. However, a method other than this structure in which the closure member 64 is sewn on with a tear seam 66 may also be employed (this will be described later in the supplemental description of the example embodiments).

### II. Operation and effect

Next, the operation and effect of this example embodiment will be described.

First, the overall operation of the passenger-side airbag apparatus 10 according to the example embodiment will be outlined. If a frontal collision is detected by a front airbag sensor or a center airbag sensor, neither of which is shown, or a frontal collision is predicted by a pre-crash sensor, also not shown, the airbag ECU activates the inflator 20. When the inflator 20 is activated, it injects gas from a plurality of gas injection holes formed in the peripheral wall portion of the injector 20. This injected gas is then rectified by a diffuser, after which it flows into the passenger-side airbag 44. As a result, the passenger-side airbag 44 expands. When the internal pressure of the bag reaches a predetermined value or more, the airbag door 16 tears along the tear line and opens in one section toward the inside surface 46A side of the windshield 46. When the airbag door 16 opens, an open portion 48 for bag expansion is formed in the upper surface 12A of the instrument panel 12 and the passenger-side airbag 44 expands back toward the passenger seat 28 side.

Here in this example embodiment, the air chamber of the passenger-side airbag 44 is separated by the pair of left and right partition members 40 into the bag base end portion 50, the main portion 58 which is T-shaped when viewed from the occupant side, and the peripheral portion 56 arranged on both sides of that main portion 58. As a result, when gas is injected from the inflator 20, it first flows into the bag base end portion 50 and is then supplied into the main portion 58 without being supplied into the peripheral portion 56. Therefore, the main portion 58 that includes the center portion 52 and the upper portion 54 quickly expands and is deployed toward the occupant with the T shape maintained. As a result, the head portion of the occupant P is caught by the main portion 58, which absorbs the collision energy during a frontal collision. The initial restraint position of the occupant P is able to be maintained as it is with the related art because the length L (see FIG 1) of the passenger-side airbag 44 in the longitudinal direction of the vehicle when the airbag is expanded and deployed is set to be the same as the length of a conventional passenger-side airbag in the longitudinal direction of the vehicle when that airbag is expanded and deployed.

To elaborate, an occupant is usually restrained in vehicle seat at his or her abdominal region (including the lumbar region) and chest region by webbing of a seat belt apparatus that is fastened. Therefore, the part of the occupant most likely to move a great deal toward the front of the vehicle due to inertia at the time of a vehicle collision is the head region. Accordingly, with this example embodiment, the collision energy during a vehicle collision is absorbed by catching and restraining the head region of the occupant with the main portion of the airbag that includes the center portion and the upper portion.

Also, when occupant P comes into contact with the main portion 58 and the internal pressure of the main portion 58 increases, the tear seams 66 of the first vent holes 60 formed in the vertical walls 41 of the partition member 40 and the second vent holes 62 formed in the horizontal walls 42 of the partition member 40 tear such that the closure members 64 open. As a result, the gas inside the main portion 58 flows into the peripheral portion 56 through the first vent holes 60 and the second vent holes 62.
Accordingly, the peripheral portion 56 expands and absorbs the collision energy of a part of the upper body of the occupant P except for the head region. Also, supplying the gas from inside the main portion 58 into the peripheral portion 56 enables gas that was conventionally lost outside the passenger-side airbag to be more effectively used.

In this way, with the passenger-side airbag apparatus 10 according to the example embodiment, the early restraint performance of the occupant P can be ensured and the size of the passenger-side airbag 44 greatly reduced by restraining the abdominal and chest regions of the occupant P using the seat belt apparatus 30 and expanding and deploying the main portion 58 of the passenger-side airbag 44 to catch and restrain the head region of the occupant P first.

In addition, according to this example embodiment, the main portion 58 also has the upper portion 54 so compared with a main portion 58 that only has the center portion 52, the surface area that contacts the inside surface 46A of the windshield 46 is able to be increased. Accordingly, the behavior of the main portion 58 when the airbag is deployed is that much more stable.

As described above, the passenger-side airbag apparatus 10 according to this example embodiment not only enables the size of the passenger-side airbag 44 to be further reduced while ensuring the early restraint performance of the passenger-side airbag 44 with respect to the occupant P, but also stabilizes the behavior of the airbag during deployment.

Also in this example embodiment, the first vent holes 60 and the second vent holes 62 are formed in the vertical walls 41 and the horizontal walls 42, respectively, of the partition member 40. The closure members 64, which are sewn on with tear seams 66, close the vent holes 60 and 62. The closure members 64 tear along tear seams 66 when the internal pressure of the main portion 58 is equal to or greater than then predetermined value, but do not tear when the internal pressure is less than that predetermined value. This structure enables the passenger-side airbag 44 to be efficiently deployed with the minimum amount of gas. As a result, this example embodiment is able to further reduce the size of the passenger-side airbag 44 even more effectively. III. Second example embodiment

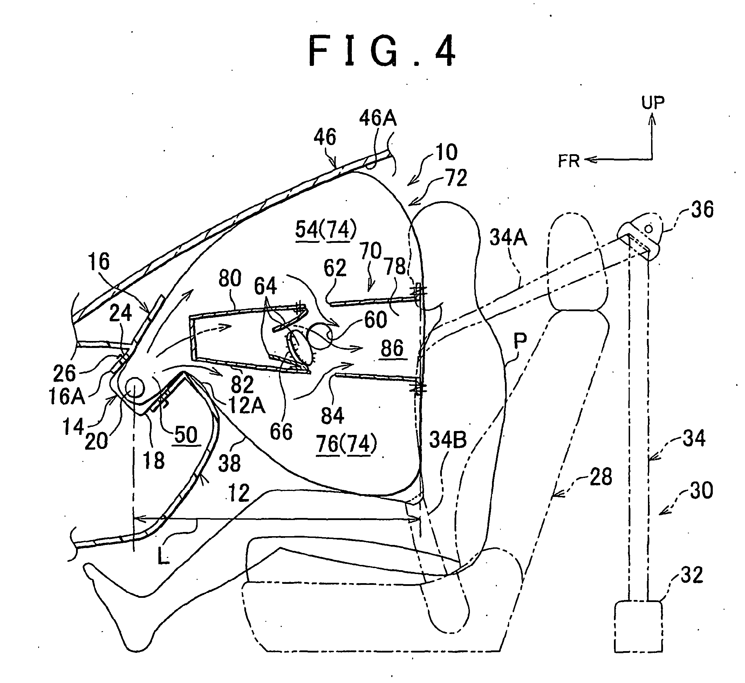

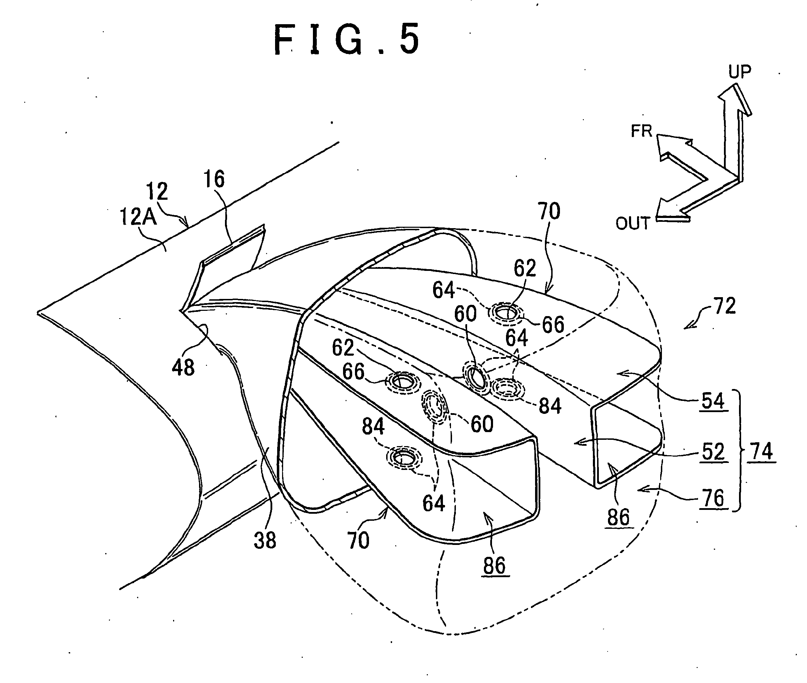

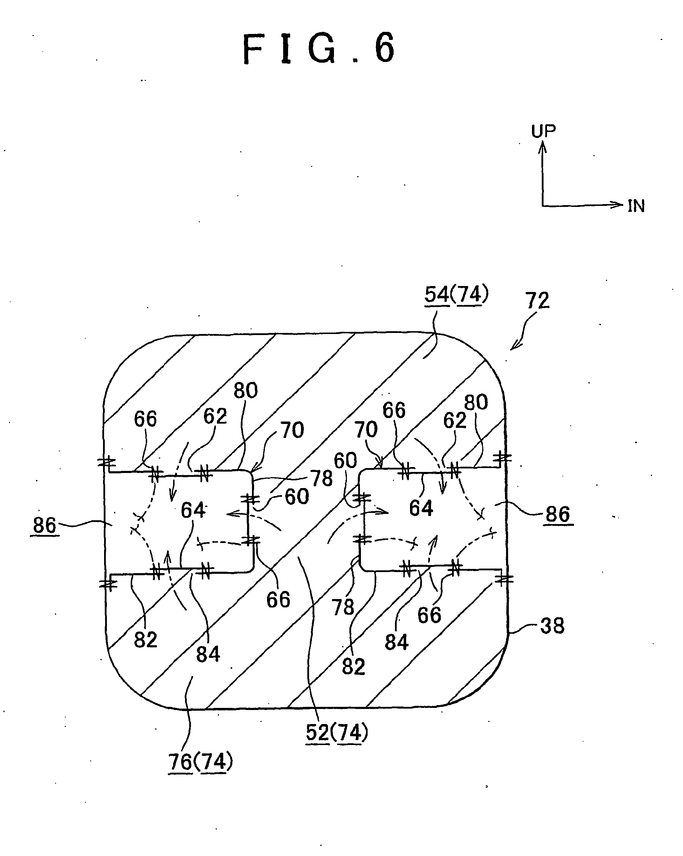

Next, a second example embodiment of the airbag apparatus according to the invention will be described with reference to FIGS. 4 to 6. Structural parts in this second example embodiment that are the same as those in the first example embodiment described above will be denoted by the same reference numerals and descriptions thereof will be omitted.

As shown in the drawings, in the passenger airbag apparatus 10 according to the second example embodiment is **characterized in that** a main portion 74 of a passenger-side airbag 72 is shaped like the letter "I" formed of the center portion 52, the upper portion 54, and a lower portion 76 using a partition member 70 that is formed like a sideways letter "U" when viewed from the occupant side.

More specifically, the partition member 70 includes three elements, i.e., a vertical wall 78, an upper wall 80, and a lower wall 82. The peripheral edge portion of each element is sewn onto the bag foundation fabric by a method similar to that described in the first example embodiment above. Correspondingly, in addition to the first vent holes 60 and the second vent holes 62, third vent holes 84 are also formed in the lower wall 82.

According to the example embodiment having the structure described above, gas injected from the inflator 20 first passes through the bag base end portion 50 and then flows into the main portion 74, i.e., into each of the center portion 52, the upper portion 54, and the lower portion 76, so that the main portion 74 of the airbag expands and deploys in a I shape. The length of the passenger-side airbag 72 in the longitudinal direction of the vehicle when the airbag is deployed is the length L that is the same as it is in the first example embodiment described above. When the internal pressure of the main portion 74 becomes equal to or greater than a predetermined value, each of the first vent holes 60, the second vent holes 62, and the third vent holes 84 provided in their respective elements of the partition member 70 open and the peripheral portion 86 expands.

Here, in this example embodiment, the lower portion 76, which extends out to both sides in the bag width direction and expands together with the center portion 52 is provided on the lower end side of the center portion 52 of the main portion 74. That is, the lower portion 76 is provided in addition to the upper portion 54 and the center portion 52. Therefore, this lower portion 76, together with the seat belt apparatus 30, is able to restrain the abdominal region of the occupant P early on in a collision.

Also, by adding the lower portion 76, the upper portion 54 is able to contact the inside surface 46A of the windshield 46 and the lower portion 76 is able to contact the upper surface 12A of the instrument panel 12. Accordingly, the main portion 74 of the passenger-side airbag 72 is supported both from above and below when the airbag 72 deploys, which stabilizes the behavior of the main portion 74.

As a result, this example embodiment can improve the occupant protection performance in terms of both enhancing the protection performance with respect to the abdominal region of the occupant and stabilizing the behavior of the main portion 74.

### IV. Third example embodiment

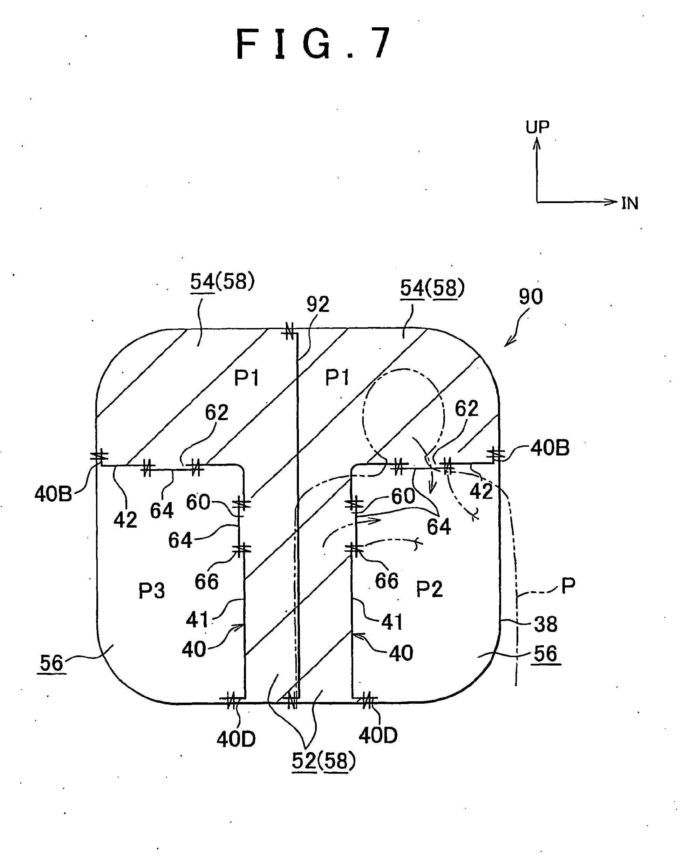

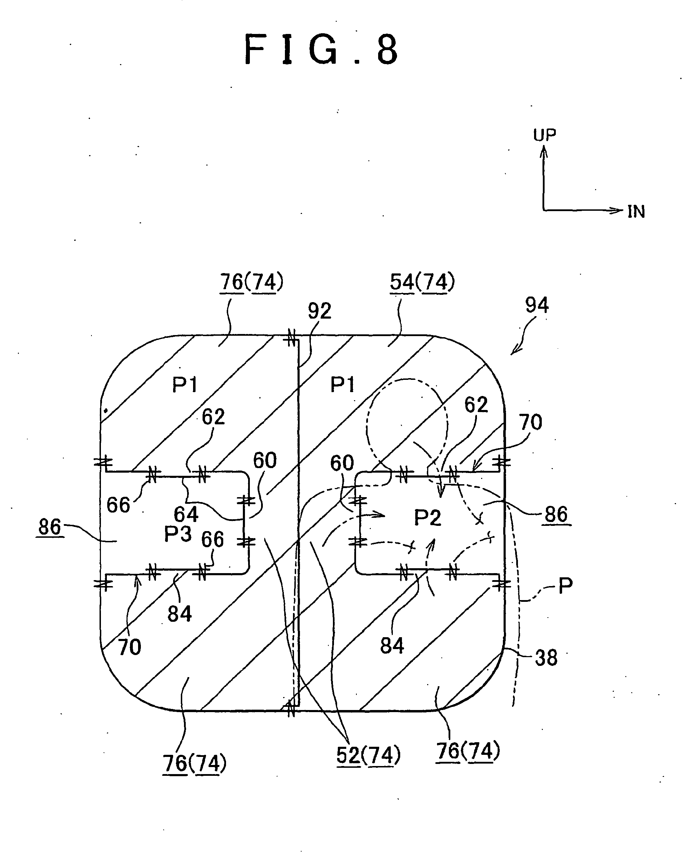

Next, a third example embodiment of the airbag apparatus according to the invention will be described with respect to FIGS. 7 and 8. Structural parts in this third example embodiment that are the same as those in the first example embodiment described above will be denoted by the same reference numerals and descriptions thereof will be omitted.

A passenger-side airbag 90 shown in FIG. 7 is **characterized in that** a second partition member 92 extending from the upper end portion to the lower end portion of the bag is provided at a portion in the middle of the main portion 58 of the T-shaped type passenger-side airbag 44 of the first example embodiment described above. This second partition member 92 divides the air chamber of the main portion 58 into two sections, i.e., a left section and a right section.

On the other hand, a passenger-side airbag 94 shown in FIG. 8 is an airbag in which the second partition member 92 have been applied to the I-shaped type passenger-side airbag 72 of the second example embodiment described above.

According to this structure, the second partition member 92 is provided in a portion substantially in the middle in the width direction of the main portions 58 and 74. As a result, gas flows to both sides of the second partition member 92 in the main portion 58 and 74 so that both sides of the main portion 58 and 74 expand and deploy. Because gas will not pass through the second partition 92 in the main portion 58 and 74, the airbag is also effective in a so-called oblique collision in which the collision surface is at an angle. That is, in an oblique collision, the direction in which the occupant P moves due to inertia is offset from the front of the vehicle to the left or right (see the alternate long and two short dashes line in FIGS. 7 and 8). Therefore, if the main portion 58 and 74 is divided at portion substantially in the middle in the width direction, then no matter which direction the occupant P moves (i.e., regardless of whether the occupant P swings to the left or to the right with respect to straight ahead of the vehicle) due to inertia, the head region of the occupant P is able to be reliably caught and the collision energy absorbed. As a result, this example embodiment improves the occupant protection performance particularly during an oblique collision.

With regard to the pressure in each air chamber, when the occupant P contacts the area to the right side of the center line (i.e., the second partition member 92) of the passenger-side airbag 90, the first vent holes 60 and the second vent holes 62 remain closed until the main portion 58 fills up with gas. Therefore, the internal pressure P1 of the left and right main portions 58 is the highest, the internal pressure P2 of the right side peripheral portion 56 is the second highest, and the internal pressure P3 of the left side peripheral portion 56 is the lowest.

### V. Fourth example embodiment

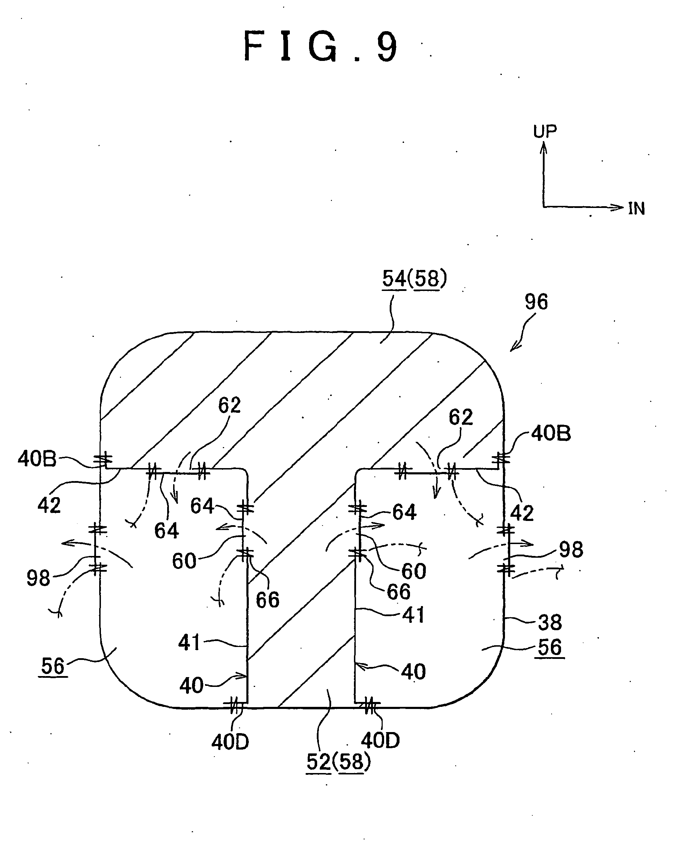

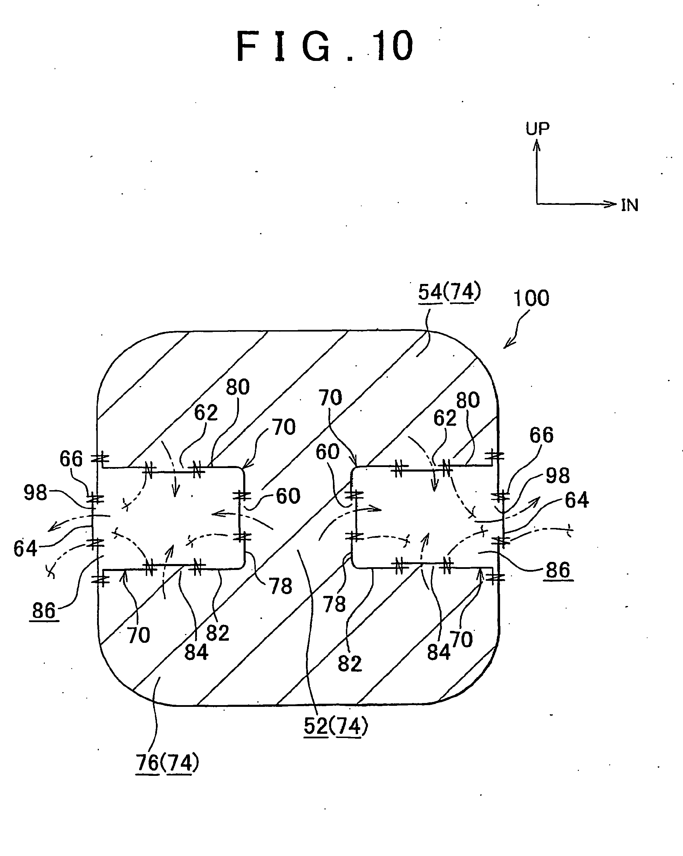

Next, a fourth example embodiment of the airbag apparatus according to the invention will be described with reference to FIGS. 9 and 10. Structural parts in this fourth example embodiment that are the same as those in the first example embodiment described above will be denoted by the same reference numerals and descriptions thereof will be omitted.

A passenger-side airbag 96 shown in FIG 9 is **characterized in that** it is provided with fourth vent holes 98 in predetermined positions on the peripheral portion 56 of the T-shaped type passenger-side airbag 44 of the first example embodiment described above. These fourth vent holes 98 enable gas to escape outside of the bag from the peripheral portion 56.

On the other hand, a passenger-side airbag 100 shown in FIG 10 is an airbag in which the fourth vent holes have been applied to the I-shaped type passenger-side airbag 72 of the second example embodiment described above.

According to the foregoing structures, gas injected from the inflator 20 flows into the main portion 58 and 74 thereby expanding and deploying it, after which the gas passes through the first vent holes 60, the second vent holes 62, and the third vent holes 84 (not provided in the passenger-side airbag 96 in FIG 9) and into the peripheral portion 56 and 86. When the internal pressure of the peripheral portion 56 and 86 becomes equal to or greater then a predetermined value due to absorbing the energy when catching the head region and the like of the occupant P, the fourth vent holes 98 open to reduce the gas pressure. As a result, the reaction force applied to the upper body of the occupant P from the passenger-side airbag 96 and 100 is reduced.

### VI. Fifth example embodiment

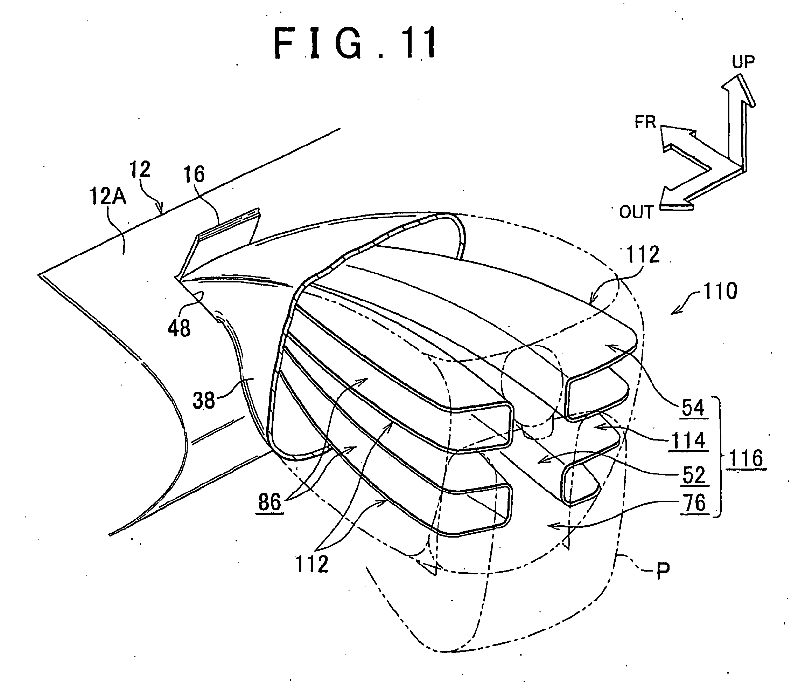

Next, a fifth example embodiment of the airbag apparatus according to the invention will be described with reference to FIG. 11. Structural parts in this fifth example embodiment that are the same as those in the first example embodiment described above will be denoted by the same reference numerals and descriptions thereof will be omitted.

As shown in FIG 11, this passenger-side airbag 110 is **characterized in that** it applies the I-shaped type passenger-side airbag 72 of the second example embodiment described above and has partition members 112 each of which is formed in the shape of a sideways letter "U" when viewed from the occupant side arranged on two levels, i.e., upper and lower, inside the bag. Accordingly, a middle portion 114 extends out to both sides in the bag width direction parallel with the upper portion 54 and the lower portion 76 near a middle position in the height direction of the center portion 52. That is, the main portion 116 includes four elements, i.e., the center portion 52, the upper portion 54, the lower portion 76, and middle portion 114. Incidentally, the middle portion 114 is an expanding portion corresponding to the shoulders of the occupant P when the occupant P contacts the passenger-side airbag 110. In FIG 11, the first vent holes 60, the second vent holes 62, and the third vent holes 84 are omitted.

According to the foregoing structure, the middle portion 114 first catches and restrains the head region of the occupant P with the center portion 52 and the upper portion 54, and then catches and restrains the shoulders of the occupant P. Therefore, the head region as well as the shoulders of the occupant P are restrained early on in a collision, which effectively inhibits the amount the occupant. P moves toward the front of the vehicle due to inertia. As a result, the occupant protection performance is further improved.

### VII. Supplemental description of the example embodiments

The following will enumerate on supplemental descriptions of the foregoing example embodiments.

Each of the foregoing example embodiments was described presuming that the invention is applied to the passenger-side airbag apparatus 10. The invention is not limited to this, however. That is, the invention may also be applied as a driver seat airbag apparatus in a lever operated type vehicle or the like in which the steering structure does not use a usual steering wheel.

In each of the foregoing example embodiments, the webbing 34 of the seat belt apparatus 30 that restrains the occupant is normal webbing, but the invention is not limited to this. For example, a so-called air belt that expands with gas from an inflator during a frontal collision may also be employed.

The phrase "during a frontal collision" in the invention includes not only when a frontal collision of the host vehicle has been detected by an airbag sensor, but also when a frontal collision between the host vehicle and another vehicle or the like has been predicted by a collision predicting sensor such as a pre-crash sensor.

In the foregoing example embodiments, the first vent holes 60, the second Vent holes 62, the third vent holes 84, and the fourth vent holes 98 are structured to be able to be closed and opened using the tear seam 66. The invention is not limited to this, however. That is, they may also be kept closed by a valve mechanism that varies the opening amount according to the internal pressure of the main portion 58 and 74. For example, instead of being sewn with tear seams, the closure members may be structured so that they are closed by elastic force using a spring and the opening amount of the first through the fourth vent holes 60 to 98 increases as the internal pressure rises. This example corresponds to one example embodiment of the invention.

According to this structure, the reaction force applied to the head region of the occupant P from the center portion 52 of the main portion 58 and 74 can be increased or decreased according to the speed with which the head region moves due to inertia. That is, when the head region of the occupant P moves fast due to inertia, control can be performed to increase the opening amount of the valve mechanism in order to increase the amount of gas flowing into the peripheral portion 56 and 86 from the center portion 52 of the main portion 58 and 74, thereby increasing the energy absorption efficiency during a collision. This reduces the reaction force applied to the head region of the occupant P from the center portion 52 of the main portion 58 and 74. As a result, this example embodiment makes it possible to control the energy absorption efficiency of the main portion 58 and 74 during a frontal collision (i.e., control the reaction force input to the head region of the occupant P from the main portion 58 and 74), thereby improving the occupant protection performance even more.

While the invention has been described with reference to exemplary embodiments thereof, it is to be understood that the invention is not limited to the exemplary embodiments or constructions, but to the scope of the claims.

## Claims

1. An airbag apparatus **characterized by** comprising:
gas generating means (20) for injecting gas that is activated when a vehicle collision occurs; and
an airbag (44; 72; 90; 94; 96; 100; 110), which is stored folded up in an instrument panel (12), and includes i) a main portion (58; 74; 116) that has a center portion (52) of a predetermined width that deploys toward an occupant upon receiving a supply of gas generated by the gas generating means (20) and an upper portion (54), which is provided extending out toward both sides in the bag width direction on an upper end side of the center portion (52) and expands together with the center portion (52), and ii) a peripheral portion (56; 86), which is provided around the main portion (58; 74; 116) while being separated from the main portion (58; 74; 116) by a partition member (40; 70; 112), in which a communication hole (60, 62, 84) providing communication with the main portion (58; 74; 116) is formed, that expands upon receiving a supply of gas from the main portion (58; 74; 116) via the communication hole (60, 62, 84).

2. The airbag apparatus according to the claim 1, wherein the communication hole (60, 62, 84) is closed when an internal pressure of the main portion (58; 74; 116) is less than a predetermined value, and opened when the internal pressure of the main portion (58; 74; 116) becomes equal to or greater than the predetermined value.

3. The airbag apparatus according to claim 2, wherein the communication hole (60, 62, 84) is closed by a closure member (64) that is larger than the outer periphery of the communication hole (60, 62, 84), and an outer peripheral portion of the closure member (64) is sewn on with a tear seam (66) that tears when subject to an internal pressure equal to or greater than the predetermined value.

4. The airbag apparatus according to claim 2 or 3, wherein the predetermined value is a value of a gas pressure when the main portion (58; 74; 116) is completely expanded and deployed.

5. The airbag apparatus according to any one of claims 1 to 4, wherein a lower portion (76), which extends out toward both sides in the bag width direction and expands together with the center portion (52), is provided on a lower end side of the center portion (52).

6. The airbag apparatus according to any one of claims 1 to 5, wherein a middle portion (114), which extends out toward both sides in the bag width direction and expands together with the center portion (52), is provided in a predetermined position in the height direction of the center portion (52).

7. The airbag apparatus according to any one of claims 1 to 6, wherein the main portion (58; 74; 116) is divided by a second partition member (92) at a portion in substantially the middle in the bag width direction of the main portion (58; 74; 116).

8. The airbag apparatus according to any one of claims 1, 2, 5, 6, and 7, wherein the communication hole (60, 62, 84) is closed by a valve mechanism that varies the opening amount according to the internal pressure of the main portion (58; 74; 116).

9. The airbag apparatus according to claim 8, wherein the valve mechanism is a spring.

10. The airbag apparatus according to any one of claims 1 to 9, wherein a communication hole (98) that opens when the internal pressure of the peripheral portion (56; 86) becomes equal to or greater than the predetermined value is provided between the peripheral portion (56; 86) and outside of the airbag.

## Patentansprüche

1. Airbagvorrichtung, welche aufweist:
eine Gaserzeugungseinrichtung (20) zum Einblasen von Gas, welche aktiviert wird, wenn eine Fahrzeugkollision auftritt; und
einen Airbag (44; 72; 90; 94; 96; 100; 110), welcher zusammengefaltet in einem Armaturenbrett (12) verstaut ist und welcher aufweist: i) einen Hauptabschnitt (58; 74; 116), welcher einen Mittelabschnitt (52) einer vorbestimmten Breite hat, der sich bei Zufuhr eines durch die Gaserzeugungseinrichtung (20) erzeugten Gases zu einem Insassen hin entfaltet, und einen oberen Abschnitt (54) hat, der sich auf einer oberen Endseite des Mittelabschnitts in Airbagbreitenrichtung zu beiden Seiten (52) erstreckt und sich zusammen mit dem Mittelabschnitt (52) ausdehnt, sowie ii) einen Umfangsabschnitt (56; 86), welcher um den Hauptabschnitt (58; 74; 116) vorgesehen ist, von dem Hauptabschnitt (58; 74; 116) durch ein Trennteil (40; 70; 112) getrennt ist, in welchem eine Verbindungsöffnung (60, 62, 84) ausgebildet ist, welche eine Verbindung zum Hauptabschnitt (58; 74; 116) ermöglicht, und sich bei Zufuhr eines Gases über die Verbindungsöffnung (60, 62, 84) vom Hauptabschnitt (58; 74; 116) ausdehnt.

2. Airbagvorrichtung gemäß Anspruch 1, wobei die Verbindungsöffnung (60, 62, 84) geschlossen wird, wenn ein Innendruck des Hauptabschnitts (58; 74; 116) kleiner als ein vorbestimmter Wert ist, und geöffnet wird, wenn der Innendruck des Hauptabschnitts (58; 74; 116) gleich oder größer als der vorbestimmte Wert wird.

3. Airbagvorrichtung gemäß Anspruch 2, wobei die Verbindungsöffnung (60, 62, 84) durch ein Verschlussteil (64) geschlossen wird, welches größer als der Außenumfang der Verbindungsöffnung (60, 62, 84) ist, und ein Außenumfangsabschnitt des Verschlussteil (64) mit einer Reißnaht (66) aufgenäht ist, welche reißt, wenn sie einem Innendruck gleich oder größer als der vorbestimmte Wert ausgesetzt ist.

4. Airbagvorrichtung gemäß Anspruch 2 oder 3, wobei der vorbestimmte Wert ein Wert eines Gasdrucks ist, wenn der Hauptabschnitt (58; 74; 116) komplett ausgedehnt und entfaltet ist.

5. Airbagvorrichtung gemäß einem der Ansprüche 1 bis 4, wobei ein unterer Abschnitt (76), welcher sich in Airbagquerrichtung zu beiden Seiten hin erstreckt und sich zusammen mit dem Mittelabschnitt (52) ausdehnt, an einer unteren Endseite des Mittelabschnitts (52) vorgesehen ist.

6. Airbagvorrichtung gemäß einem der Ansprüche 1 bis 5, wobei ein Mittelabschnitt (114), welcher sich zu beiden Seiten in Airbagquerrichtung hin erstreckt und sich zusammen mit dem Mittelabschnitt (52) ausdehnt, an einer vorbestimmten Stelle in der Höhenrichtung des Mittelabschnitts (52) vorgesehen ist.

7. Airbagvorrichtung gemäß einem der Ansprüche 1 bis 6, wobei der Hauptabschnitt (58; 74; 116) durch ein zweites Trennteil (92) an einem in Airbagquerrichtung des Hauptabschnitts (58; 74; 116) im Wesentlichen mittigen Abschnitt geteilt wird.

8. Airbagvorrichtung gemäß einem der Ansprüche 1, 2, 5, 6 und 7, wobei die Verbindungsöffnung (60, 62, 84) durch einen Ventilmechanismus geschlossen wird, welcher den Öffnungsbetrag gemäß dem Innendruck des Hauptabschnitts (58; 74; 116) variiert.

9. Airbagvorrichtung gemäß Anspruch 8, wobei der Ventilmechanismus eine Feder ist.

10. Airbagvorrichtung gemäß einem der Ansprüche 1 bis 9, wobei eine Verbindungsöffnung (98), welche sich öffnet, wenn der Innendruck des Umfangsabschnitts (56; 86) gleich oder größer als der vorbestimmte Wert wird, zwischen dem Umfangsabschnitt (56; 86) und einer Außenseite des Airbags vorgesehen ist.

## Revendications

1. Dispositif de coussin de sécurité gonflable **caractérisé par** le fait de comprendre:
un moyen (20) de génération de gaz destiné à injecter du gaz qui est activé lorsqu'une collision d'un véhicule se produit; et
un coussin de sécurité gonflable (44; 72; 90; 94; 96; 100; 110), qui est stocké de manière repliable dans un tableau (12) de bord, et comporte i) une partie principale (58; 74; 116) qui a une partie centrale (52) d'une largeur prédéterminée qui se déploie vers un occupant en recevant une alimentation de gaz généré par le moyen (20) de génération de gaz et une partie supérieure (54), qui est pourvue de sorte à s'étendre vers les deux côtés dans la direction de la largeur du coussin de sécurité gonflable sur un côté d'extrémité supérieure de la partie centrale (52) et qui s'agrandit en même temps que la partie centrale (52), et ii) une partie périphérique (56; 86), qui est pourvue autour de la partie principale (58; 74; 116) tout en étant séparée de la partie principale (58; 74; 116) par un élément de séparation (40; 70; 112), où un trou de communication (60, 62, 84) fournissant une communication avec la partie principale (58; 74; 116) est formé, qui s'agrandit en recevant une alimentation de gaz à partir de la partie principale (58; 74; 116) à travers le trou de communication (60, 62, 84).

2. Dispositif de coussin de sécurité gonflable selon la revendication 1, dans lequel le trou de communication (60, 62, 84) est fermé lorsqu'une pression interne de la partie principale (58; 74; 116) est inférieure à une valeur prédéterminée, et est ouvert lorsque la pression interne de la partie principale (58; 74; 116) devient supérieure ou égale à la valeur prédéterminée.

3. Dispositif de coussin de sécurité gonflable selon la revendication 2, dans lequel le trou de communication (60, 62, 84) est fermé par un organe de fermeture (64) qui est plus grand que la périphérie externe du trou de communication (60, 62, 84), et sur une partie périphérique externe de l'organe de fermeture (64) un joint de déchirure (66) est cousu qui se déchire lorsqu'il est soumis à une pression interne supérieure ou égale à la valeur prédéterminée.

4. Dispositif de coussin de sécurité gonflable selon la revendication 2 ou 3, dans lequel la valeur prédéterminée est une valeur de la pression du gaz lorsque la partie principale (58; 74; 116) est complètement agrandie et déployée.

5. Dispositif de coussin de sécurité gonflable selon l'une quelconque des revendications 1 à 4, dans lequel une partie inférieure (76), qui s'étend vers les deux côtés dans la direction de la largeur du coussin à sécurité gonflable et qui s'agrandit en même temps que la partie centrale (52), est pourvue sur un côté d'extrémité inférieure de la partie centrale (52).

6. Dispositif de coussin de sécurité gonflable selon l'une quelconque des revendications 1 à 5, dans lequel une partie intermédiaire (114), qui s'étend vers les deux côtés dans la direction de la largeur du coussin à sécurité gonflable et qui s'agrandit en même temps que la partie centrale (52), est pourvue dans une position prédéterminée dans la direction de la hauteur de la partie centrale (52).

7. Dispositif de coussin de sécurité gonflable selon l'une quelconque des revendications 1 à 6, dans lequel la partie principale (58; 74; 116) est divisée par un deuxième organe de séparation (92) au niveau d'une partie qui se trouve essentiellement au milieu dans la direction de la largeur du coussin à sécurité gonflable de la partie principale (58; 74; 116).

8. Dispositif de coussin de sécurité gonflable selon l'une quelconque des revendications 1, 2, 5, 6, et 7, dans lequel le trou de communication (60, 62, 84) est fermé par un mécanisme de soupape qui fait varier la quantité d'ouverture selon la pression interne de la partie principale (58; 74; 116).

9. Dispositif de coussin de sécurité gonflable selon la revendication 8, dans lequel le mécanisme de soupape est un ressort.

10. Dispositif de coussin de sécurité gonflable selon l'une quelconque des revendications 1 à 9, dans lequel un trou de communication (98) qui s'ouvre lorsque la pression interne de la partie périphérique (56; 86) devient supérieure ou égale à la valeur prédéterminée est pourvu entre la partie périphérique (56; 86) et la partie extérieure du coussin de sécurité gonflable.
